# EUROPEAN PATENT APPLICATION

(11) **EP 4 401 092 A1**
(43) Date of publication of application: **17.07.2024**
(21) Application number: 23305043.4
(22) Date of filing: 12.01.2023
(51) Int. Cl.: G21K 1/00, G06N 10/40

(54) **METHOD AND SYSTEM FOR TRAPPING PARTICLES IN TRAPPING SITES**

(71) Applicant: Pasqal, 91300 Massy (FR); Institut d'Optique Graduate School, 91127 Palaiseau cedex (FR); Consejo Superior De Investigaciones Científicas, 28006 Madrid (ES); Centre national de la recherche scientifique, 75016 Paris (FR)
(72) Inventor: DREON, Davide, 91300 MASSY (FR); XIMENEZ, Bruno, 91300 MASSY (FR); BLOCH, Etienne, 91300 MASSY (FR); SIGNOLES, Adrien, 91300 MASSY (FR); SCHOLL, Pascal, 91127 PALAISEAU (FR); BARREDO, Daniel, 28006 MADRID (ES); BROWAEYS, Antoine, 75016 PARIS (FR); LAHAYE, Thierry, 75016 PARIS (FR)
(74) Representative: Lavoix

(57) **Abstract**

The present invention relates to a method for trapping particles in an array of trapping sites, each trapping site being an optical tweezer creating an attractive energy potential for the particles, the optical tweezer being created by a first laser beam (20), each trapping site being capable of trapping a maximum number of particles, the method comprising:
- loading particles in the trapping sites while detecting the presence of a particle in each trapping site, and
- each time the presence of a maximum number of particles has been detected in a trapping site, applying a repulsive energy potential on said trapping site using a second laser (26) beam such that the total energy potential for the particles, has a global minimum, enabling to keep the particle trapped in the trapping site while surrounding the trapping site with a repulsive barrier.

## Description

### TECHNICAL FIELD OF THE INVENTION

The present invention concerns a method for trapping particles in trapping sites. The method also concerns a system for trapping particles in trapping sites.

### BACKGROUND OF THE INVENTION

Neutral atom-based quantum computing processors use optical tweezers to trap individual atoms. Such tweezers consist in an array of tightly focused laser beams, which are typically derived from a single light source (usually a laser) and split in several traps by a beam shaping device (e.g. spatial light modulator, acousto-optical deflectors, metasurfaces, ...). The array of traps can be one-, two- or three- dimensional and does not need to be a regularly spaced (Bravais) lattice. The atoms are trapped at the focus of the tweezers, where the light intensity is maximum, if the wavelength of the light is chosen such that it generates an attractive optical potential.

Atoms are loaded in the traps from a background gas of cold atoms (sub-mK temperature, typically from an optical molasses or a magneto optical trap). The functioning of these reservoirs relies on shining close-to-resonance laser light on the atoms, which provides the cooling mechanism. The cooling light triggers an additional effect: whenever two atoms are close enough, a cycle of absorption/emission of the cooling photons releases kinetic energy to the atomic pair (light assisted collision). As a consequence, if a pair of atoms is trapped in an optical tweezer, the kinetic energy released during the collision would be enough to expel both atoms from the trap (collisional blockade regime). Thus, an optical tweezer trap will be occupied always by either one or zero atom, as every atomic pair is rapidly expelled.

An example of such a system is described in the article by Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, Septembre 2020. ISSN 2521-327X. doi:10.22331 /q-2020-09-21-327.

In the collisional blockade regime, at any given time a trap is either filled with one atom or empty, in a genuinely random way. Since loading an empty trap and emptying a loaded trap originate from the same event, namely the capture of an atom in the tweezer, 50% of the traps are loaded in average in a first approximation. Therefore, a target array of optical tweezers cannot be loaded deterministically (stochastic loading).

The current solution to this problem is atomic arrangement: starting from an initial stochastic filling of the tweezer array, the atoms are then reshuffled into the desired position. Since a random half of the target traps would be initially empty, the initial amount of optical tweezers needs to be the double with respects to the target ones. In this way the total number of trapped atoms will be correct, even though half of them would be trapped in a wrong location. The atoms that are initially in a "wrong" position are moved to the desired position using an additional displaceable optical tweezer (referred to as "moving tweezer") that also generates an attractive trapping potential. The atoms are loaded from their initial trapping site into the moving tweezer, which is used to move them to the final target trap. Multiple moving tweezers can work in parallel to speed up the process.

Although this technique was proved successful, it comes with several limitations:
- It needs the double of optical tweezers with respect to the target traps. This requires the double of the laser power and a larger field of view of the optical system.
- Since the rearrangement comes with errors (such as losing an atom, failing to displace it, etc.), it requires multiple iterations to converge.
- It is time consuming, since every move cannot be arbitrarily fast due to physical constraints (adiabaticity, trap deformation).
- The time to compute the rearrangement moves scales as a power law of the number of particles.
- The algorithm to calculate the moves is not universal: regular and arbitrary trap rearrangements require different moves to be performed.
- For every target array there is a best choice of initial array of tweezers that needs to be calculated.

Hence, this atomic rearrangement procedure is time-consuming and must be repeated several times to correct errors and losses that occur during the rearrangement itself. Furthermore, the computational time and the rearrangement time itself increase with the number of atoms, which becomes problematic as the future quantum processor are designed to trap more and more atoms.

### SUMMARY OF THE INVENTION

Hence, there exists a need for a method enabling to quickly obtain an array of trapped particles forming an array of qubits.

To this end, the invention relates to a method for trapping particles in an array of trapping sites, each trapping site being an optical tweezer creating an attractive energy potential for the particles, the optical tweezer being created by a first laser beam, each trapping site being capable of trapping a maximum number of particles, the method comprising:
- loading particles in the trapping sites while detecting the presence of a particle in each trapping site, and
- each time the presence of a number of particles equal to the maximum number has been detected in a trapping site, applying a repulsive energy potential on said trapping site using a second laser beam such that the total energy potential for the particles, resulting from the sum of the attractive energy potential and of the repulsive energy potential on said trapping site, has a global minimum, enabling to keep the particle trapped in the trapping site while surrounding the trapping site with a repulsive barrier.

The method according to the invention may comprise one or more of the following features considered alone or in any combination that is technically possible:
- for each trapping site in which the presence of a number of particles equal to the maximum number has been detected, the repulsive energy potential is spatially superimposed on the attractive energy potential so that the point of maximum energy of the repulsive energy potential sensibly faces the point of minimal energy of the attractive energy potential;
- each attractive energy potential is formed from a focused first laser beam and each repulsive energy potential is formed from a focused second laser beam;
- the second laser beam is less focused than the first laser beam so that the width of the repulsive energy potential is bigger than the width of the attractive energy potential;
- the total energy potential has a height depending on the intensity and of the wavelength of each of the first laser beam and the second laser beam;
- the first laser beam has a wavelength which is strictly superior to an excitation wavelength of the particles so as to create the attractive energy potential for the particles, the second laser beam having a wavelength which is strictly inferior to an excitation wavelength of the particles so as to create the repulsive energy potential for the particles;
- the loading of the particles, the detection, and the application of a repulsive energy potential, occur repeatedly:
   - until a predetermined duration is reached, or
   - until the number of trapping sites, in which the presence of a number of particles equal to the maximum number has been detected, is superior to a predetermined number, the predetermined number being preferably strictly superior to half the number of the trapping sites, preferably being strictly superior to two thirds the number of the trapping sites, advantageously being equal to the number of trapping sites;
- during the loading of the particles, at least some particles are trapped in reservoir sites which are different from the array of trapping sites, the method comprising, after the loading of the particles, the moving of the particles trapped in the reservoir sites so as to fill the trapping sites which have no trapped particles;
- at least one trapping site already contains a trapped particle before the loading of the particles;
- the particles are polarizable particles sensitive to alternative current Stark shift from lasers, the particles being preferably neutral atoms, such as Rubidium atoms or Strontium atoms.

The present invention also relates to a method for trapping particles in an array of trapping sites, each trapping site being an optical tweezer creating an attractive energy potential for the particles, the optical tweezer being created by a first laser beam, each trapping site being capable of trapping at most one particle, the method comprising:
- loading particles in the trapping sites while detecting the presence of a particle in each trapping site, and
- each time the presence of a particle has been detected in a trapping site, applying a repulsive energy potential on said trapping site using a second laser beam such that the total energy potential for the particles, resulting from the sum of the attractive energy potential and of the repulsive energy potential on said trapping site, has a global minimum, enabling to keep the particle trapped in the trapping site while surrounding the trapping site with a repulsive barrier.

The invention also relates to a system for trapping particles in an array of trapping sites, wherein the system comprises:
- a source of particles;
- a trapping device configured to generate the array of trapping sites, each trapping site being an optical tweezer creating an attractive energy potential for the particles, the optical tweezer being created by a first laser beam, each trapping site being capable of trapping a maximum number of particles;
- a detecting device able to detect the presence of a number of particles equal to the maximum number in each trapping site;
- a shielding device configured to apply a repulsive energy potential on each trapping site, using a second laser beam, when said presence of a number of particles equal to the maximum number has been detected in said trapping site such that the total energy potential of the particles, resulting from the sum of the attractive energy potential and of the repulsive energy potential on said trapping site, has a global minimum, enabling to keep the particle trapped in the trapping site while surrounding the trapping site with a repulsive barrier, and
- an electronic controller configured to control the shielding device depending on the particles detection performed by the detecting device so as to apply a repulsive energy potential on each trapping site in which the presence of a number of particles equal to the maximum number has been detected.

The system according to the invention may comprise one or more of the following features considered alone or in any combination that is technically possible:
- the trapping device comprises:
   - a first laser able to generate a first laser beam, and
   - a first beam shaper configured to shape the first laser beam so as to obtain an array of optical tweezers forming the array of trapping sites, and
- the shielding device comprises:
   - a second laser able to generate a second laser beam, and
   - a second beam shaper configured to shape the second laser beam so as to obtain an array of repulsive energy potential applied on the trapping sites in which the presence of a number of particles equal to the maximum number has been detected;
- the first beam shaper comprises a spatial light modulator;
- the second beam shaper comprises an acousto-optic deflector.

### BRIEF DESCRIPTION OF THE DRAWINGS

The invention will be easier to understand in view of the following description, provided solely as an example and with reference to the appended drawings in which:
- Figure 1 is a schematic view of an example of a system for trapping particles in trapping sites,
- Figure 2 is a schematic representation of an example of implementation of a method for trapping particles in trapping sites with the superposition of a repulsive energy potential on the trapping sites for which the presence of a particle has been detected,
- Figure 3 is a schematic representation of the total energy potential resulting from the sum of an attractive energy potential and of a repulsive energy potential applied on a trapping site,
- Figure 4 is a flowchart of an example of implementation of a method for trapping particles in trapping sites, and
- Figure 5 is the result of an experiment during which photons have been collected at a location of a trapping site, the top curve being obtained without applying a repulsive energy potential whereas the bottom curve is obtained when applying a repulsive energy potential.

### DETAILED DESCRIPTION OF SOME EMBODIMENTS

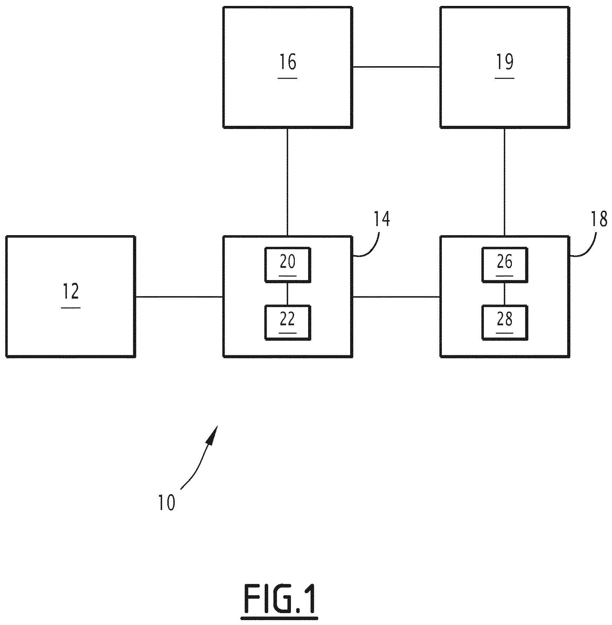

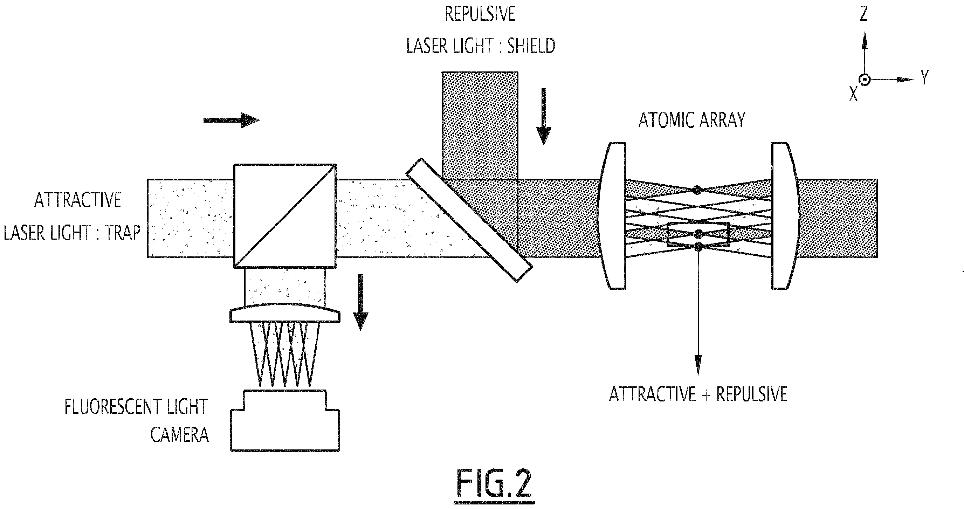

A system 10 for trapping particles in an array of trapping sites is illustrated on figure 1 and at least partially on figure 2.

The particles trapped in the trapping sites enable to generate an array of qubits, also called quantum register.

The system 10 may be part of a system, preferably a quantum system, such as a quantum computing processor (e.g., a quantum processing unit, or QPU) comprising hardware elements enabling to manipulate the qubits generated by the system 10 so as to perform quantum operations on the qubits. Typically, the quantum system uses the quantum properties of matter, such as superposition and entanglement, to perform operations on the qubits. In particular, a qubit refers to a two-level quantum mechanical system.

In a non-limiting example, a qubit may comprise two basic quantum states I0> and I1 > representing the possible quantum states of the qubit. According to the superposition principle of quantum mechanics, any superposition of the form al0> + bl1> (a and b being complex numbers and aa*+bb*=1) is a possible quantum state of the qubit.

The particles meant to be trapped in the trapping sites are polarizable particles sensitive to alternative current (AC) Stark shift from lasers.

Preferably, the particles are atoms, and in particular electrically neutral atoms. Neutral atoms are, for example, Rubidium atoms, or Strontium atoms.

As illustrated on figure 1, the system 10 comprises a source 12 of particles, a trapping device 14, a detecting device 16, a shielding device 18 and an electronic controller 19.

In the case of neutral atoms, the source 12 of particles comprises a vacuum chamber in which the particles (for example atoms) are located. In particular, during use, a vacuum is created in the vacuum chamber and a dilute atomic vapor is formed in the vacuum chamber. Other embodiments are nonetheless possible.

The trapping device 14 is configured to generate optical tweezers forming an array of trapping sites.

The trapping device 14 comprises a first laser 20 and a first beam shaper 22.

The first laser 20 is able to generate a first laser beam capable of forming an attractive energy potential for trapping the particles.

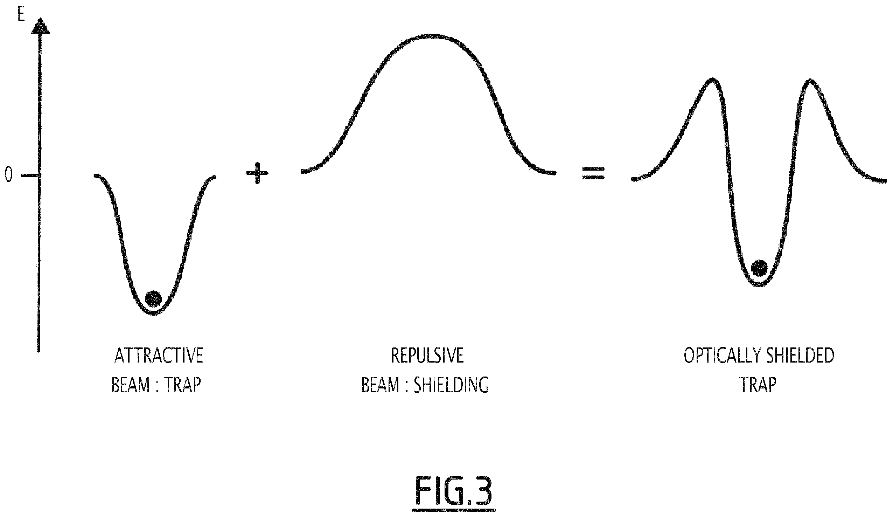

In an example of implementation, when the particles are neutral atoms, such as Rubidium atoms, the trapping energy potential can be created by using the first laser 20 to generate a laser beam with a wavelength strictly superior to one of the excitation wavelengths of the atoms. This creates an attractive energy potential for the particles, as visible on figure 3.

In the case of Rubidium atoms, the wavelengths associated to the strongest dipole transitions are: 780 nm and 795 nm. The wavelength of the first laser 20 can thus be chosen above 795 nm, for example superior or equal to 800 nm.

The first beam shaper 22 is configured to shape the first laser beam (e.g., to impart a specific intensity pattern to the first laser beam) so as to obtain an array of optical tweezers forming the array of trapping sites.

In an example of implementation, the first beam shaper 22 comprises a spatial light modulator (SLM), such as an optical phase modulator, preferably a liquid crystal optical modulator (LCOS-SLM).

The spatial light modulator is configured to reflect the first laser beam and to imprint an intensity pattern of the first laser beam. The intensity pattern forms the trapping sites (optical tweezers). For example, the first beam shaper 22 also comprises a lens able to focus the first laser beam and the intensity pattern is formed at the focal plane of the lens (e.g., in the source 12 of particles).

The detecting device 16 is configured to detect the presence of a particle in each trapping site. The detecting device 16 is, for example, a camera such as a charge-coupled device (CCD) camera, or any suitable imaging technology. For example, in the case of atoms, the camera is suitable to detect the fluorescence emitted from the atoms trapped in the trapping sites.

The shielding device 18 is configured to apply a repulsive energy potential on each trapping site when the presence of a particle has been detected in said trapping site.

The shielding device 18 comprises a second laser 26 and a second beam shaper 28.

The second laser 26 is configured to generate a second laser beam capable of forming a repulsive energy potential on a trapping site.

In an example of implementation, when the particles are neutral atoms, such as Rubidium atoms, the trapping energy potential can be created by using the second laser 26 to generate a laser beam with a wavelength strictly inferior to an excitation wavelength of the atoms. This creates a repulsive energy potential for the particles, as visible on figure 2.

For example, for Rubidium atoms, the wavelength of the second laser 26 is below 780 nm, for example inferior or equal to 764 nm.

The second beam shaper 28 is configured to shape the second laser beam so as to obtain an array of repulsive energy potentials applied on the trapping sites in which the presence of a particle has been detected.

For example, the repulsive energy potentials created by the second laser beam have a similar spatial distribution than the optical tweezers created by the first laser beam, except that the energy potentials are repulsive instead of being attractive.

In an example of implementation, the second beam shaper 28 comprises an acousto-optic deflector (AOD). The acoustic frequencies of the acousto-optic deflector are chosen so as to generate, from the second laser 26, an array of repulsive energy potentials applied on the trapping sites in which the presence of a particle has been detected. The frequencies may be chosen automatically, for example, through a look-up-table associating a frequency with a position of a repulsive energy potential.

The use of an acousto-optic deflector is particularly adapted for a one-dimensional (1D) array of trapping sites.

In other embodiments, for trapping arrays having more than one dimension (e.g., 2D arrays), other beam shaping devices could be used, such as a spatial light modulator (SLM) as previously described.

The electronic controller 19 is configured to control the shielding device 18 depending on the particles' detection performed by the detecting device 16.

The electronic controller 19 is, for example, a calculator comprising a processor (classical processor) with a data processing unit able to interact with a computer program product when the computer program product is loaded on the data processing unit. In a variant, the calculator is a printed circuit or an integrated circuit (FPGA) or any equivalent control means.

The system 10 may also comprise, in some embodiments, additional electronic control circuitry responsible for the operation of the source 12 of particles and the trapping device 14.

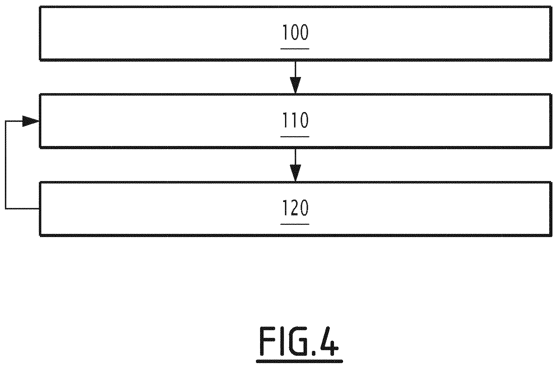

A method using the system 10 for trapping particles in an array of trapping sites so as to obtain an array of qubits, will now be described with reference to the flowchart of figure 4.

The trapping method comprises a step 100 of obtaining an array of trapping sites, each trapping site being an optical tweezer creating an attractive energy potential for the particles.

The trapping sites are generated by the trapping device 14.

In practice, in many embodiments, and especially with neutral atoms, a trapping site can be either in an occupied state or in a free (unoccupied) state. In the occupied state, an atom is trapped in the trapping site. In the unlikely event that a second atom enters a trapping site already occupied by a first atom, the resulting atomic pair of atoms will be rapidly expelled from the trapping site. In other words, each trapping site is capable of trapping at most one particle.

However, in other embodiments, especially when working with other types of particles, such as molecules, it may be possible to trap more than one particle in each trap. Thus, in some embodiments, each trapping site may be capable of trapping a maximum number of particles, said maximum number of particles being higher than one (for example equal to two or three). In that case, the detecting device 16 and/or the control electronics can be modified in consequence to account for the maximum number of particles. Thus, for example, the detecting device 16 is configured to detect the presence of a number of particles in a trapping site equal to the maximum number or particles allowed for that trapping site.

In an example of implementation, the first laser 20 generates a first laser beam and the first beam shaper 22 shapes the first laser beam so as to obtain an array of optical tweezers. The array of optical tweezers forms the array of trapping sites.

The trapping method comprises a step 110 of loading particles in the trapping sites while detecting the presence of a particle in each trapping site. The loading is performed by the source 12 of particles. The detection is performed by the detecting device 16.

In an example of implementation, the detection occurs continuously (in real time and in parallel of the loading) after a predetermined duration enabling to load a first amount of particles in the trapping sites. The predetermined duration could be null, e.g., equal to zero. In a variant, the detection occurs continuously as soon as the number of trapped particles is above a predetermined percentage, for example above 45 % of trapped particles (the percentage being expressed relative to the total number of trapping sites).

In an example of implementation, at least one trapping site already contains a trapped particle before the loading of the particles. The already trapped particles are, for example, remaining particles from a previous quantum computation cycle. In this case, the detection occurs preferably after a null duration so as to shield the remaining particles from the beginning of the loading. In a variant, all the trapping sites are empty at the beginning of the loading.

Each time the presence of a particle has been detected in a trapping site, the trapping method comprises the application 120 of a repulsive energy potential on said trapping site. Hence, when the presence of a particle has been detected in several trapping sites, an array of repulsive energy potentials is applied on such trapping sites.

The application of the repulsive energy potential is performed by the shielding device 18 controlled by the electronic controller 19.

The application of the repulsive energy potential is performed preferably immediately after the detection.

Figure 4 illustrates an example of an experimental set-up. The attractive beam and the repulsive beam come from light shapers, capable of producing array of attractive energy potentials (optical tweezers) and array of repulsive energy potentials, at the focus of a high numerical aperture lens (high-NA lens). The repulsive and attractive lights are superimposed at the focus, creating the optical shield effect for the trapped particles. Fluorescence from the trapped particles (atoms) is detected on a camera.

The total energy potential resulting from the sum of the attractive energy potential and of the repulsive energy potential has a global minimum enabling to keep the particle trapped in the trapping site while surrounding the trapping site with a repulsive barrier (preferably in all three spatial directions).

The height of the repulsive energy potential barrier must be sufficiently high to reduce the probability of other particles (e.g., other atoms) to be trapped into said trapping site (and preferably to prevent them altogether from being trapped in the trapping sites), thus preventing triggering a light-induced loss (e.g., an event where an atom is ejected from the trapping site).

In particular, Figure 3 illustrates that the sum of an attractive energy potential and a repulsive energy potential creates a resultant energy potential shielding the trapped particle from incoming collisions.

In case of errors (one trapping site that has been previously shielded has lost its occupying particle), the corresponding repulsive energy potential may be deactivated for the concerned trapping sites, and the procedure can further continue so as to fill the trapping site with another particle.

In an example of implementation, the loading of the particles, the detection, and the process of applying a repulsive energy potential, occur continuously:
- until a predetermined duration is reached, or
- until the number of trapping sites in which the presence of a particle has been detected is superior to a predetermined number, the predetermined number preferably being strictly superior to half the number of the trapping sites, preferably being strictly superior to two thirds the number of the trapping sites, advantageously being equal to the number of trapping sites.

In a variant, the loading of the particles, the detection, and the process of applying a repulsive energy potential, occur continuously until all the trapping sites are filled with a particle and shielded.

The width of the resulting energy potential depends on the width of the attractive energy potential and of the repulsive energy potential. Preferably, the second laser beam is less focused than the first laser beam so that the width of the repulsive energy potential is bigger than the width of the attractive energy potential. This enables to keep the particle trapped while creating a repulsive barrier, especially for a Gaussian laser beam.

The height of the resulting energy potential depends on the intensity and of the wavelength of each of the first laser beam and the second laser beam. For example, for laser beams having given wavelengths, a higher intensity for the first laser beam enables to obtain deeper trapping sites.

In an example of implementation, for each trapping site in which the presence of a particle has been detected, the repulsive energy potential is spatially superimposed on the attractive optical tweezer so that the point of maximum energy of the repulsive energy potential sensibly faces (i.e. faces within a tolerance) the point of minimal energy of the attractive energy potential.

In some embodiments, once the shielding is activated for a trapping site, the repulsive energy potential is not necessarily active at the same time as the attractive optical tweezer. For example, the repulsive energy potentials and the attractive optical tweezers may be activated periodically in alternation.

Optionally, during the loading of the particles, at least some particles are trapped in reservoir sites. The reservoir sites are optical tweezers that are different from the array of trapping sites, and which come in addition of such trapping sites. In this case, the method comprises, after the loading of the particles, the moving of the particles trapped in the reservoir sites so as to fill the trapping sites which have no trapped particles. This step is a rearrangement step but here the scenario would require much less moves with respect to the case of 50% initial filling of the state of the art.

Hence, the method and system described above in this example enable to increase the number of initially trapped particles, above the 50% limit given by the collisional blockade. In the specific optimal case of 100% trap filling there is no need for particle rearrangement. In particular, the repulsive barrier created by the repulsive energy potentials prevents other particles from getting captured into the trap and causing the ensuing collisional losses. In absence of other losses channels, this process converges geometrically in time towards 100% filling of the traps.

The method and system described above can be used in the field of quantum computing or simulation, where optical tweezers are used to generate periodic and arbitrary registers composed of atomic qubits. This technique allows to increase the number of filled traps (for a given array), does not necessarily require a rearrangement of the atoms (and the resulting errors) and allows faster operation of the quantum processor.

The invention is applicable to array of different shapes, such as one-dimensional arrays (1D), two-dimensional arrays (2D) and three-dimensional arrays (3D).

In addition, the method and system described above do not rely on the existence of repulsive molecular potentials for light-assisted collisions. Furthermore, they do not necessarily require the collisional blockade regime.

In some examples of the description, the invention has been described with reference to atoms, such as Rubidium atoms. However, in many embodiments, the method and system described above are also applicable to other types of particles, especially to any polarizable particle susceptible to AC Stark shift from lasers.

The person skilled in the art will understand that the embodiments and variants described above in the description can all be combined provided that they are technically compatible. In particular, the invention applies to embodiments enabling to trap more than one particle in each trap. In that case, the detecting device 16 is configured to detect the presence of a number of particles in a trapping site equal to a maximum number of particles, and the repulsive energy potential is applied each time the presence of a number of particles equal to the maximum number has been detected in a trapping site.

### EXPERIMENTAL DATA

A proof of concept was carried out consisting in illuminating a single atom trapped in an optical tweezer (attractive energy potential) with a repulsive energy potential for the atom. The experiment showed an increase of the lifetime of the atom in the trap, compared to the average lifetime in the absence of the repulsive energy potential, thus demonstrating the shielding effect from atoms that are outside the trap.

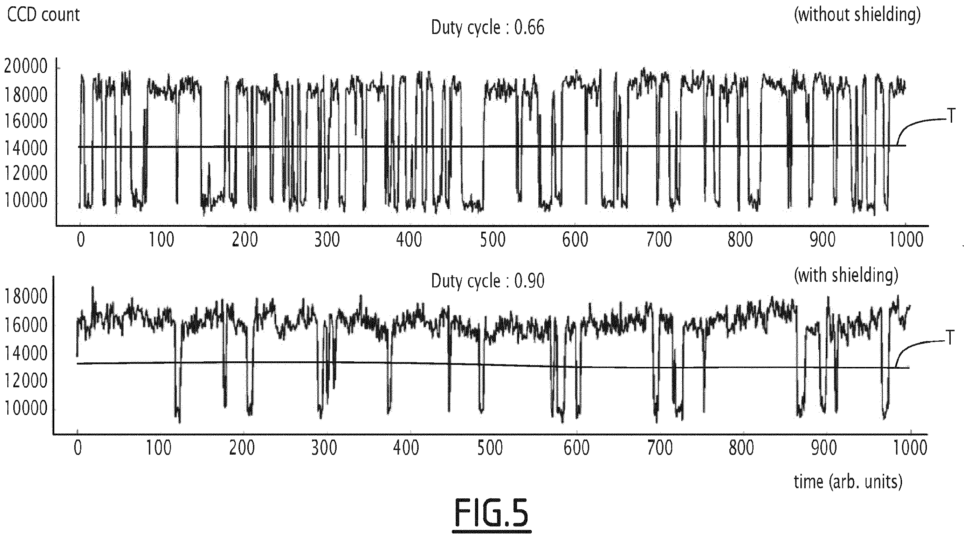

On figure 5, it is represented on the top plot, a time trace of the fluorescence of a trapped atom (expressed in CCD counts in the present example). The high level (above the threshold line T) represents an atom in the trap and the low level (below the threshold line T) represents an empty trap. In this regime (top plot), the trap is continuously loaded and unloaded by other exterior atoms. For this particular case, we acquired a time trace of 1000 samples and we found an atom trapped in 66% of the samples.

Then, we turned the shielding beam on, only when an atom was detected in the trap (when it left the trap the shielding beam was turned off) and acquired another time trace in the same conditions (apart from the shielding device 18). The results are presented in the bottom plot of figure 5. It appears that we found an atom in the time trace in 90% of the samples, representing an improvement in the lifetime of the atoms which were shielded from the surrounding atmosphere.

We also further extended the implementation of this technique on a multi-trap unidimensional array. The attractive traps are generated from a single trapping beam, using a spatial light modulator to realize 8 optical tweezers in the focal plane of a high NA lens. For the repulsive light we use an acousto-optic deflector (AOD) driven with multiple RF tones. Each tone deflects the light by a different angle and allows fast and individual switching of the intensity. The tones are selected such as the repulsive and the attractive lasers are superimposed on the atoms. Here again, the repulsive beam is triggered on the atomic signal such that it is only turned on when an atom is detected in the tweezer. We measured a filling of -80% on average over 8 trapping sites (between 75% and 85%, the loss on performance compared to the single trap case being due to imperfections in laser alignment and aberrations).

These experiments could be extended to a scenario with a beam shaping device capable of dynamically switching ON/OFF locally the shielding laser beams in more than one dimension, as explained above.

The above embodiments and example can be generalized when the trapping sites are capable of holding more than one particle (the maximum number of particles being higher than 1), in which case the creation of a repulsive potential is activated only when the number of detected particles in the trap become equal to the maximum number of particles.

Many other embodiments are possible without departing from the scope of the invention defined in the appended claims.

## Claims

1. A method for trapping particles in an array of trapping sites, each trapping site being an optical tweezer creating an attractive energy potential for the particles, the optical tweezer being created by a first laser beam, each trapping site being capable of trapping a maximum number of particles, the method comprising:
- loading particles in the trapping sites while detecting the presence of a particle in each trapping site, and
- each time the presence of a number of particles equal to the maximum number has been detected in a trapping site, applying a repulsive energy potential on said trapping site using a second laser beam such that the total energy potential for the particles, resulting from the sum of the attractive energy potential and of the repulsive energy potential on said trapping site, has a global minimum, enabling to keep the particle trapped in the trapping site while surrounding the trapping site with a repulsive barrier.

2. A method according to claim 1, wherein, for each trapping site in which the presence of a number of particles equal to the maximum number has been detected, the repulsive energy potential is spatially superimposed on the attractive energy potential so that the point of maximum energy of the repulsive energy potential sensibly faces the point of minimal energy of the attractive energy potential.

3. A method according to claim 1 or 2, wherein each attractive energy potential is formed from a focused first laser beam and each repulsive energy potential is formed from a focused second laser beam.

4. A method according to claim 3, wherein the second laser beam is less focused than the first laser beam so that the width of the repulsive energy potential is bigger than the width of the attractive energy potential.

5. A method according to any one of claims 1 to 4, wherein the total energy potential has a height depending on the intensity and of the wavelength of each of the first laser beam and the second laser beam.

6. A method according to any one of claims 1 to 5, wherein the first laser beam has a wavelength which is strictly superior to an excitation wavelength of the particles so as to create the attractive energy potential for the particles, the second laser beam having a wavelength which is strictly inferior to an excitation wavelength of the particles so as to create the repulsive energy potential for the particles.

7. A method according to any one of claims 1 to 6, wherein the loading of the particles, the detection, and the application of a repulsive energy potential, occur repeatedly:
- until a predetermined duration is reached, or
- until the number of trapping sites, in which the presence of a number of particles equal to the maximum number has been detected, is superior to a predetermined number, the predetermined number being preferably strictly superior to half the number of the trapping sites, preferably being strictly superior to two thirds the number of the trapping sites, advantageously being equal to the number of trapping sites.

8. A method according to any one of claims 1 to 7, wherein during the loading of the particles, at least some particles are trapped in reservoir sites which are different from the array of trapping sites, the method comprising, after the loading of the particles, the moving of the particles trapped in the reservoir sites so as to fill the trapping sites which have no trapped particles.

9. A method according to any one of claims 1 to 8, wherein at least one trapping site already contains a trapped particle before the loading of the particles.

10. A method according to any one of claims 1 to 9, wherein the particles are polarizable particles sensitive to alternative current Stark shift from lasers, the particles being preferably neutral atoms, such as Rubidium atoms or Strontium atoms.

11. A system for trapping particles in an array of trapping sites, wherein the system comprises:
- a source (12) of particles,
- a trapping device (14) configured to generate the array of trapping sites, each trapping site being an optical tweezer creating an attractive energy potential for the particles, the optical tweezer being created by a first laser beam, each trapping site being capable of trapping a maximum number of particles,
- a detecting device (16) able to detect the presence of a number of particles equal to the maximum number in each trapping site,
- a shielding device (18) configured to apply a repulsive energy potential on each trapping site, using a second laser beam, when said presence of a number of particles equal to the maximum number has been detected in said trapping site such that the total energy potential of the particles, resulting from the sum of the attractive energy potential and of the repulsive energy potential on said trapping site, has a global minimum, enabling to keep the particle trapped in the trapping site while surrounding the trapping site with a repulsive barrier, and
- an electronic controller (19) configured to control the shielding device (18) depending on the particles detection performed by the detecting device (16) so as to apply a repulsive energy potential on each trapping site in which the presence of a number of particles equal to the maximum number has been detected.

12. A system according to claim 11, wherein :
- the trapping device (14) comprises:
• a first laser (20) able to generate a first laser beam, and
• a first beam shaper (22) configured to shape the first laser beam so as to obtain an array of optical tweezers forming the array of trapping sites, and
- the shielding device (18) comprises:
• a second laser (26) able to generate a second laser beam, and
• a second beam shaper (28) configured to shape the second laser beam so as to obtain an array of repulsive energy potential applied on the trapping sites in which the presence of a number of particles equal to the maximum number has been detected.

13. A system according to claim 12, wherein the first beam shaper (22) comprises a spatial light modulator.

14. A system according to claim 12 or 13, wherein the second beam shaper (28) comprises an acousto-optic deflector.
